(19) Europäisches Patentamt
European Patent Office
Office européen des brevets

(11) **EP 2 731 177 A1**

## (12) EUROPEAN PATENT APPLICATION
published in accordance with Art. 153(4) EPC

(43) Date of publication:
**14.05.2014 Bulletin 2014/20**

(21) Application number: **12807736.9**

(22) Date of filing: **03.07.2012**

(51) Int Cl.:
*H01M 4/13* (2010.01)     *H01M 4/139* (2010.01)
*H01M 4/36* (2006.01)     *H01M 4/58* (2010.01)
*H01M 4/62* (2006.01)     *H01M 4/66* (2006.01)

(86) International application number:
**PCT/JP2012/066988**

(87) International publication number:
**WO 2013/005739 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2011 JP 2011150135**

(71) Applicant: **Showa Denko K.K.**
**Tokyo 105-8518 (JP)**

(72) Inventors:
• **MATSUO Akira**
**Tokyo 105-8518 (JP)**
• **OHMORI Masahiro**
**Tokyo 105-8518 (JP)**
• **KUNISAWA Masatoshi**
**Tokyo 105-8518 (JP)**

(74) Representative: **Strehl Schübel-Hopf & Partner**
**Maximilianstrasse 54**
**80538 München (DE)**

(54) **ELECTRODE FOR LITHIUM SECONDARY BATTERIES, LITHIUM SECONDARY BATTERY, AND METHOD FOR PRODUCING ELECTRODE FOR LITHIUM SECONDARY BATTERIES**

(57) This invention related to an electrode for lithium secondary batteries, which enables high-rate charging and discharging and is capable of maintaining high battery capacity retention ratio even under large charge and discharge current conditions; a lithium secondary battery; and a method for producing an electrode for lithium secondary batteries. The electrode for lithium secondary batteries includes a metal foil, a coating layer that is provided on the surface of the metal foil and an electrode mixture laminated on the surface of the coating layer, and wherein the coating layer contains a binder and conductive particles; and the electrode mixture contains an electrode active material and 0 to 1.4mass% of a conductive additive with respect to the electrode mixture.

EP 2 731 177 A1

**Description**

The present invention relates to an electrode for lithium secondary batteries, a lithium secondary battery and a method of producing an electrode for lithium secondary batteries.

Priority is claimed on Japanese Patent Application No. 2011-150135 filed on July 6, 2011, the content of which is incorporated herein by reference.

BACKGROUND OF THE INVENTION

Currently, the lithium ion secondary battery is used in the applications, such as a laptop, mobile phone, video camera or the like because of its high energy density. Generally, a small lithium ion battery uses lithium manganese oxides or lithium cobalt oxides as cathode active materials and uses graphite as anode materials.

In general, a cathode of lithium ion secondary batteries is formed by providing cathode active materials on metal foils having current collecting effect. The cathode active materials having electron conductivity includes carbon particles, lithium manganese oxides or lithium cobalt oxides. Aluminum is commonly used as the metal foil. Further, polyvinylidene fluoride (PVDF) or polytetrafluoroethylene (PTFE), for example, is used as a binder to binding the carbon particles and the cathode active materials.

Further, the anode is formed by fixing anode active materials on the metal foils having collector effect. For example, copper is generally used as the metal foil. And then, polyvinylidene fluoride (PVDF) is used as a binder to bind the anode active materials.

Recently, since it becomes active to apply a power source such as an automobile secondary battery having high performance, conventional problems which were not expected when using the small battery has been raised.

One of the problems is rapid charge and discharge characteristics, in which a power source capable of supplying a large current is required. In this case, the charge capacity of the battery increases, and therefore, there is a need to finish the charging in a short time. When the charge time is set too long, the battery cannot be used during the charging period. Charging by a large current must be completed as rapidly as possible. Regarding the rapid charge and discharge characteristics, charge and discharge performance at the high current is an important performance characteristic of the secondary battery.

As described above, it is required to perform the rapid charge and discharge and to increase the charge and discharge current. However, when performing the charge and discharge to lithium ion secondary batteries at large current, defects of decrease in capacitance (battery capacity retention ratio) becomes extremely larger when the battery was repeatedly charged and discharged because of the internal resistance. Many attempts have been made as shown in the following document in order to correct the defect.

Particularly, in the cathode, the conductivity of the electrode active material conventionally-used is low. Therefore, an electrode mixture has been produced by adding conductive particles, such as carbon material in several to 10 % with respect to the cathode mixture (Patent Documents 7-9, for example). However, from the viewpoint of improving the energy density of the battery, it is necessary to add as few conductive particles as possible. Therefore, some attempts such as reducing the internal resistance of the battery by adding fewer conductive particles, have been made, for example in Patent Documents 4 to 6.

[Patent Document 1] JP Patent Publication No. 2001-266850
[Patent Document 2] JP Examined Patent Second Publication No. H07-123053
[Patent Document 3] JP Examined Patent Second Publication No. H04-24831
[Patent Document 4] JP Patent Publication No. H07-130356
[Patent Document 5] JP Patent Publication No. 2005-222772
[Patent Document 6]JP Patent Publication No. 2007-005281
[Patent Document 7] JP Patent Publication No. 2011-071019
[Patent Document 8] JP Patent Publication No. 2006-261062
[Patent Document 9] JP Patent Publication No. 2001-351612
[Non-Patent Document 1]: 45th Battery Symposium in Japan (2004) 3C18

SUMMARY OF THE INVENTION

However, the techniques described in the above literatures were not sufficient to improve the problems. Regarding the battery in Patent Document 6, there is also a problem in the production process, because it requires a treatment at high temperature and pressure, and has a poor productivity.

The present invention has been made in view of the above circumstances, and provides such an electrode for lithium secondary batteries, a lithium secondary battery, and a method of producing an electrode for lithium secondary batteries that it is possible to charge and discharge the battery without addition of a large amount of conductive particles in the electrode mixture layer, and the battery electrode can be easily produced, and it becomes possible to maintain a high battery capacity retention ratio even when charge-discharge current is large.

In order to solve the above problems, the present invention adopts the following configurations.

(1) An electrode for lithium secondary batteries, comprising

a metal foil and an electrode mixture laminated on the metal foil,

wherein the electrode further comprises a coating layer comprising a binder and conductive particles between the metal foil and the electrode mixture, and the electrode mixture comprises an electrode active material and 0 mass% to 1.4 mass% of a conductive additive with respect to the electrode mixture.

(2) The electrode for lithium secondary batteries according to (1),

wherein the electrode mixture comprises an electrode material attaching a carbon material to a partial surface or the entire surface of the particles of the electrode active material, and

the electrode mixture is substantially free of the conductive additive.

(3) The electrode for lithium secondary batteries according to (1) or (2),

wherein an area ratio of the conductive particles in the coating layer is 50% or more and less than 100%.

(4) The electrode for lithium secondary batteries according to any one of (1) to (3),

wherein the conductive particles are carbon particles.

(5) The electrode for lithium secondary batteries according to any one of (1) to (4),

wherein the binder is at least one selected from the group consisting of a polysaccharide and a derivative thereof.

(6) The electrode for lithium secondary batteries according to any one of (1) to (5),

wherein the coating layer comprises at least one selected from the group consisting of an organic acid or a derivative thereof.

(7) The electrode for lithium secondary batteries according to any one of (1) to (6),

wherein the electrode active material comprises at least one selected from the group consisting of a lithium-containing composite oxide, a lithium-containing composite chalcogen and lithium-containing olivine-type phosphate.

(8) The electrode for lithium secondary batteries according to (7),

wherein the electrode active material comprises at least one selected from the group consisting of a lithium cobalt oxide, a lithium manganese oxide, lithium nickel oxide, lithium cobalt manganese nickel oxide, titanium sulfide (TiS2), olivine-type lithium iron phosphate or olivine-type lithium manganese phosphate.

(9) The electrode for lithium secondary batteries according to any one of (1) to (8),

wherein the binder comprises at least one selected from the group consisting of chitosan, chitin, cellulose and their derivatives.

(10) The electrode for lithium secondary batteries according to any one of (6) to (9),

wherein the organic acid or derivative thereof is at least one selected from the group consisting of trimellitic anhydride, pyromellitic anhydride and 1,2,3,4-butane tetracarboxylic acid, and derivatives thereof.

(11) The electrode for lithium secondary batteries according to any one of (1) to (10),

wherein the content of the conductive particles contained in the coating layer is in the range of 30 to 90 mass%.

(12) A lithium secondary battery comprising the electrode for lithium secondary batteries according to any of (1) to (11) and an electrolyte.

(13) A method of producing an electrode for lithium secondary batteries, the method comprises steps of forming a coating layer by

applying a coating liquid for forming the coating layer on a metal foil wherein the coating liquid comprises a dispersion medium, conductive particles and a binder; and

removing the dispersion medium to form the coating layer, and

forming an electrode mixture by

applying a coating liquid for forming the electrode mixture on the coating layer, after forming a coating layer, wherein the liquid comprises an electrode active material, a conductive additive and a dispersion medium, and

removing the dispersion medium,

wherein a composition ratio of the conductive additive is from 0 to 1.4 mass% with respect to the resulting electrode mixture.

(14) The method of producing an electrode for lithium secondary batteries according (13), wherein the method further comprises a step of pressing the electrode mixture after molding the electrode mixture.

(15) The electrode for lithium secondary batteries according to any one of (1) to (11),

wherein the electrode for lithium secondary batteries is a cathode for lithium secondary batteries which comprises

a metal foil, and a cathode mixture laminated on the metal foil,

and further comprises coating layer comprising a binder and conductive particles between the cathode mixture and the metal foil,

the cathode mixture comprises

a cathode material consisting of only cathode active material or a cathode material in which carbon material is attached to a partial surface or the entire surface of the particles of the cathode active material, and

a conductive additive wherein a composition ratio of the conductive additive is 0 mass% to l .4 mass% with respect to the cathode mixture.

(16) The electrode for lithium secondary batteries according to (15),

wherein the cathode mixture comprises a cathode material in which carbon material is attached to a partial surface or the entire surface of the cathode active material particle of the cathode mixture and the cathode mixture is substantially free of the conductive additive.

(17) The electrode for lithium secondary batteries according to (16),
wherein the cathode material in which carbon material is attached to a partial surface or the entire surface of the cathode active material particle is obtained by one of:

a method comprising firing a mixture of the cathode active material and a carbon formation material as a precursor of the carbon material, under reduction conditions or under inert conditions, at a temperature of 500 to 800°C, and
a method comprising kneading a mixture of the cathode active material and the carbon material by compressing, shearing, and rolling the mixture.

(18) The electrode for lithium secondary batteries according to (17),
wherein the metal foil is a foil of a or aluminum alloy, the conductive particles in the coating layer is a carbon particle, and the area ratio of the conductive particles is more than 50% and less than 100%,
the binder in the coating layer is one of polysaccharides or derivatives thereof, and an aromatic carboxylic acid or a derivative thereof,
the cathode active material is at least one selected from the group consisting of an olivine-type lithium iron phosphate, olivine-type lithium manganese phosphate, lithium cobalt oxide , lithium manganese oxide, lithium nickel oxide, and lithium cobalt manganese nickel oxide lithium.

(19)The method of producing an electrode for lithium secondary batteries according to (13) or (14),
wherein the electrode for lithium secondary batteries is a cathode for lithium secondary batteries, and the method comprises steps of
forming a coating layer by
applying a coating liquid for forming the coating layer on a metal foil wherein the coating liquid comprises a dispersion medium, conductive particles and a binder; and
removing the dispersion medium, and
forming an cathode mixture by
applying a coating liquid for forming the cathode mixture on the coating
layer after forming the coating layer, wherein the coating liquid comprises a cathode material consisting of only cathode active material or a cathode material in which carbon material is attached to a partial surface or the entire surface of the cathode active material particle, a conductive additive and
a dispersion medium, and

removing the dispersion medium,
wherein a composition ratio of the conductive additive is from 0 to 1.4 mass% with respect to the resulting cathode mixture.

(20) The method of producing an electrode for lithium secondary batteries according to (13), (14) or (19), wherein the cathode material is the cathode material in which carbon material is attached to a partial surface or the entire surface of the cathode active material particle, and
the method of attaching the carbon material comprises one of:

a method comprising firing a mixture of the cathode active material and a carbon formation material as a precursor of the carbon material, under reduction conditions or under inert conditions, at a temperature of 500 to 800°C, and
a method comprising kneading a mixture of the cathode active material and the carbon material by compressing, shearing, and rolling the mixture.

According to the present invention, the invention provides such an electrode for lithium secondary batteries, a lithium secondary battery, and a method of producing an electrode for lithium secondary batteries that it is possible to easily produce an electrode for lithium secondary batteries, to enable the rapid charge and discharge of the battery without a large amount of addition of conductive particles in the electrode mixture layer, and to maintain a high battery capacity retention ratio when charge and discharge current is large.

BRIEF DESCRIPTION OF THE DRAWINGS

Figure 1 is a graph showing the relationship between capacity retention ratios and discharge current rates of lithium secondary battery of Example 1 and Comparative Examples.
Figure 2 is a graph showing the relationship between capacity retention ratios and discharge current rates of lithium secondary battery of Example 2 and Comparative Examples.
Figure 3 is a graph showing the relationship between capacity retention ratios and discharge current rates of lithium secondary battery of Example 3 and Comparative Examples.
Figure 4 is a graph showing the relationship between capacity retention ratios and discharge current rates of lithium secondary battery of Example 4 and Comparative Examples.
Figure 5 is a graph showing the relationship between capacity retention ratios and discharge current rates of lithium secondary battery of Example 5 and Comparative Examples.

Figure 6 is a graph showing the relationship between capacity retention ratios and discharge current rates of lithium secondary battery of Example 6 and Comparative Examples.

DETAIL DESCRIPTION OF THE INVENTION

[Electrode of Lithium Secondary Batteries]

The electrode for lithium secondary batteries according to an embodiment of the present invention includes: a metal foil used as a current collector, an electrode mixture laminated on the metal foil, a coating layer provided between the electrode mixture and the metal foil.

< Metal Foil >

The metal foil used as the current collector, may be a general foil with no through hole, a perforated metal foil, or a foil having an opening such as a metal mesh or a porous foil. The metal foil may have a smooth surface, or may have been roughened by, for example, electrical or chemical etching.

The thickness of the metal foil is not particularly limited, and is preferably $5\mu m$ to $200\mu m$. By setting such the thickness, it is possible not only to suppress a predetermined volume ratio of the current collector and the lithium secondary battery below a certain percentage, but also maintain sufficient strength of the current collector and the electrode itself in order to improve the handling properties.

The material of the metal foil when the electrode is a cathode may use a metal having high electrochemical corrosion resistance and high electrical conductivity, preferably. In particular, a foil made of aluminum or an aluminum alloy is more preferable. As an example of the aluminum foil, for example, the pure aluminum foil A1085 or A3003 may be used.

As the material of the metal foil when the electrode is an anode, copper or an alloy of copper is preferred.

< Coating Layer >

Coating layer is composed of conductive particles and a binder. The coating layer may further include at least one selected from the group consisting of the organic acids and derivatives thereof. The coating layer may be formed on one side of the metal foil or formed on both sides of the metal foil. Further the coating layer may be formed between the electrode mixture and the metal foil. The coating layer is preferably formed in contact with the electrode mixture and the metal foil.

(Conductive Particles)

As the conductive particles used in the coating layer, it is not particularly limited as long as the particles have an electrical conductivity. Conductive particles in which a carbon element is a main component, such as carbon particles, are preferred. As the carbon particles, carbon black, graphite, vapor grown carbon fibers, carbon nanotubes, and carbon nanofibers may be used. Examples of the carbon black are furnace black or acetylene black. It is also possible to use commercially available products such as Ketjen black. These carbon particles can be used either in combination or singly. As conductive particles other than carbon particles, metal powders of gold, silver, copper, nickel, or aluminum; a mixture of the metal powders and the carbon particles; or particles formed by coating the metal powders on the surface of the carbon particles, may be used.

The conductive particles may be particles having a shape of spherical, flaky, or massive, or an irregular shape. It may be a particle having shape anisotropy in acicular, rod-like, or tibrous.

It is preferred that the conductive particles having a shape of spherical, flaky, or massive, or an irregular shape have average primary particle sizes of 10nm to $5\mu m$, and 10nm to 100nm is more preferred. An average primary particle size of the conductive particles is obtained by measuring diameters of 500 to 1000 particles by using an electron microscope, and then calculating by averaging the diameters quantitatively. Regarding the particles having non-spherical shape, maximum diameters (longest diameters) are used as the particle diameters, and then the average particle sizes are obtained by averaging the particle diameters quantitatively.

Since the surface area per mass of the conductive particles having shape anisotropy is large, the contact area with the electrode active material or the metal foil increases. Therefore, it is possible to increase the conductivity between the metal foil and the electrode active material or to increase internal conductivity of the electrode active material between each other when fewer conductive particles are added. The conductive particles having an anisotropic shape and having particular effect include vapor-grown carbon fibers, carbon nano-fibers, or carbon nanotubes or like. From the viewpoint of improving conductivity, the vapor-grown carbon fibers, carbon nano-fibers, or carbon nanotubes or like, may have an average fiber diameter of 0.001 to $0.5\mu m$, or preferably 0.003 to $0.2\mu m$, and have the average fiber length of 1 to $100\mu m$, or preferably 1 to $30\mu m$. The average fiber length and average fiber diameter are obtained by measuring the fiber lengths and fiber diameters of 500 to 1000 fibers by using an electron microscope, and then calculating by averaging them quantitatively.

As conductive particles, it is preferred that powder electrical resistance in the green compact of 100% is $5.0 \times 10^{-1}\Omega \cdot cm$ or less.

The coating layer contains the conductive particles preferably 30 to 90 mass%, more preferably 40 to 85 mass%, or most preferably 60 to 80 mass%. Thus, it is possible to obtain a current collector having a coating layer having excellent adhesion to the electrode mixture or the metal foil.

(Binder)

Although the binder contained in the coating layer is not particularly limited as long as it can binding the conductive particles and the metal foil, from the viewpoint of adhesion to a metal foil and excellent ionic permeability of lithium ion, those containing at least one selected from the group consisting of polysaccharides or derivatives thereof are preferable.

Polysaccharide is a polymer compound obtaining by polymerization of many monosaccharides or derivatives thereof by glycosidic bonds. Usually, polysaccharide is a polymer polymerized ten or more of monosaccharides or derivatives thereof. Polysaccharide polymerizing 10 or less of monosaccharides may also be used. The monosaccharide constituting the polysaccharide may be a normal monosaccharide as a basic skeleton, such as glucose having only a hydroxyl group. The other monosaccharides, such as uronic acid having a carboxyl group, or an amino sugar having an amino group or an acetyl amino group, may be used. The polysaccharide may be one of homo-polysaccharide and hetero-polysaccharide.

Specific examples of polysaccharides, such as agarose, amylose, amylopectin, alginic acid, inulin, carrageenan, chitin, glycogen, glucomannan, keratin sulfate, colominic acid, chondroitin sulfate, cellulose, dextran, starch, hyaluronic acid, pectin, pectic acid, heparan sulfate, levan, lentinan, chitosan, pullulan, or curdlan, may be used. Among these, chitin, chitosan, or cellulose is preferred, because of their high adhesion to the metal foil and the electrode mixture.

As examples of derivatives of polysaccharides, hydroxyalkyl polysaccharides, carboxyalkyl polysaccharides, or sulfated polysaccharides, may be used. Hydroxyalkyl polysaccharides are particularly preferred because they can increase the dispersibility in solvent. Hydroxyalkyl polysaccharides can be prepared by known methods.

As examples of hydroxyalkyl chitosans, hydroxyethyl chitosan, hydroxypropyl chitosan, and glyceryl chitosan, may be used. As examples of hydroxyalkyl celluloses, hydroxyethyl cellulose or hydroxypropyl cellulose may be used. As the carboxyalkyl chitosan, carboxymethyl chitosan or carboxyethyl chitosan may be used. As examples of the carboxyalkyl celluloses, carboxymethyl cellulose or carboxyethyl cellulose may be used.

As the binder other than the polysaccharides, the following examples may be used.

The fluorine-containing polymer: polyvinylidene fluoride, polytetrafluoroethylene, tetrafluoroethylene-perfluoroalkyl vinyl ether copolymer, tetrafluoroethylene-hexafluoropropylene copolymer, an ethylene-tetrafluoroethylene copolymer;

Poly (olefin oxide): polyethylene oxide, polypropylene oxide, polyethylene oxide-propylene oxide copolymer;

Elastomer: styrene-butadiene block copolymers, acrylate modified SBR resin, and gum arabic.

The weight average molecular weight of the binder is preferably $1.0 \times 10^4$ to $2.0 \times 10^5$, and is more preferably $5.0 \times 10^4$ to $2.0 \times 10^5$. When the weight average molecular weight is within this range, since ability of dispersing the conductive particles increases, the coating properties of the coating liquid is improved, and as a result, the strength of the coating layer obtained increases. The weight average molecular weight can be measured by gel permeation chromatography and then converted it to a value using, for example, pullulan standards.

The amount of the binder in the coating layer is preferably 20 to 300 parts by weight, is more preferably 40 to 200 parts by weight, and is most preferably from 60 to 100 parts by weight with respect to 100 parts by weight of the conductive particles.

When using a polysaccharide or a derivative thereof as a binder of the coating layer, it is preferable that the coating layer further contains at least one selected from the group consisting of organic acids such as sulfonic acids or carboxylic acids, or derivatives thereof. The organic acids or derivatives thereof, as a cross-linking agent of the polysaccharides and derivatives thereof, can make conductive particles to bind firmly with the metal foil. As organic acids or derivatives thereof, those having divalent or more are used preferably, and those having trivalent or more are used more preferably from the viewpoint of the high cross-linking effect. Further, since it is difficult to elute metal from metal foil, carboxylic acids or derivatives thereof are preferably used. As a carboxylic acid and a derivative, an aromatic carboxylic acid or a derivative thereof, or a chain aliphatic carboxylic acid or a derivative thereof is preferable from the viewpoint of thermal stability. A chain aliphatic carboxylic acid or a derivative thereof is preferable from the viewpoint of solubility in water. As derivatives of organic acids, esters, acid chlorides and acid anhydrides and the like may be used. Anhydride is preferable because that amount of by-product is small and that crosslinking reaction proceeds easily.

As an aromatic carboxylic acid or a derivative thereof, an aromatic divalent carboxylic acid, such as phthalic acid, isophthalic acid, or terephthalic acid; or derivatives thereof, may be used. In addition, an aromatic carboxylic acid having trivalent or more, such as trimellitic acid, pyromellitic acid, biphenyl tetracarboxylic acid, or benzophenone tetracarboxylic acid; or derivatives thereof, may be used. Of the aromatic carboxylic acids and the derivatives thereof, pyromellitic anhydride or trimellitic anhydride is preferable.

As a chain aliphatic carboxylic acid or a derivative thereof, a chain aliphatic divalent carboxylic acid, such as succinic acid, maleic acid, tartaric acid, malic acid, glutaric acid, itaconic acid and adipic acid; or derivatives thereof may be used. In addition, a chain aliphatic trivalent or more carboxylic acid, such citric acid, 1,2,3,4-butane tetracarboxylic acid and derivatives thereof may be used. Among the chain aliphatic carboxylic acids and derivatives thereof, 1,2,3,4-butane tetracarboxylic acid is preferable.

The organic acids and derivatives thereof may be used singly or in combination of two or more.

In addition, with respect to 100 parts by weight of the polysaccharides or derivatives thereof, the amount of the organic acids and derivatives thereof is preferably 30 to 300 parts by weight, is more preferably 35 to 120 parts by weitht, and is most preferably 40 to 85 parts by weight.

The coating layer may be provided on a portion of the metal foil surface, or may be provided uniformly over the entire surface. When being provided on a portion of the metal foil surface, the coating layer may be provided for example, in the central portion except the edge portion of the metal foil, and be provided in patterns, such as dots, stripes, mesh, lattice ( grid ), nested, and spiral. A ratio A1 of the area of the coating layer to the area of the metal foil is preferably 50 to 100 %, is more preferably 60-100%, and is most preferably 70 % to 100%.

A method of obtaining a ratio A1 of the area of the coating layer to the area of the metal foil is shown below.

The pattern of the coating layer of metal foil observed at a low magnification depending on the size of the pattern by using a microscope or like from the normal direction, and then the images observed in the fields of three or more locations are photographed. The photos are binarized by the image analysis processes, and then the area $S_a$ of the portion having the coating layer and the area $S_b$ of the portion without the coating layer are obtained. The ratio A1of the area of the coating layer to the area of the metal foil is calculated by the following formula:

$$A1 = (S_a) / (S_a + S_b) \times 100\%.$$

In addition, when the coating layer pattern have a large area, the ratio A1 of area of the coating layer may be obtained by measuring the length by using a vernier caliper or like. The area of both sides of the metal foil should be considered when the coating layers are provided on both sides of the metal foil. The area of one side of the metal foil should be considered when the coating layer is provided on one side of the metal foil.

The amount of the coating layer is provided on the metal foil is preferably 0.2 to 5 g/m$^2$, is more preferably 0.5 to 3 g/m$^2$, or is most preferably 1 to 2 g/m$^2$. When such an amount of the coating layer is provided, since a penetration resistance value of the current collector decreases significantly, it is possible to obtain a lithium secondary battery having low internal resistance and impedance by using the current collector.

The thickness of the coating layer is preferably 5μm or less, and is more preferably 4μm or less, or is most preferably 3μm or less. The lower limit of the thickness of the coating layer is not particularly limited as long as the function of the coating layer is exhibited, and the lower limit of the thickness of the coating layer is preferably 0.1 μm. When in the above range of the thickness of the coating layer, the penetration resistance of the coating layer decreases, and the impedance and internal resistance of the lithium secondary battery are reduced.

(Area Ratio of Conductive Particles)

The ratio of area of the conductive particles in the coating layer is 50% or more and less than 100%, preferably 60% or more and less than 100%, or more preferably 70% or more and less than 100%. The area ratio is the ratio of the area of the conductive particles to the area of the coating layer. When the area ratio is in the above range, a penetration resistance of the current collector decreases, and it is possible to reduce the impedance and the internal resistance of the lithium secondary battery obtained by using the current collector.

Since the area ratio of the conductive particles is less than 100%, there is the region in which no particle is present in the coating layer. Since there is no conductive particle contained in this region, the electron conductivity between the electrode mixture and the metal foil might decrease, and as a result, the internal resistance might increases. In practice, however, the impedance and the internal resistance of the electrode itself can be reduced because of the presence of this region. The reason may be that transfer of lithium ions between the electrolyte and the electrode active material occurs in this portion in which no conductive particle is present.

Meanwhile, on the area of the coating layer in which the conductive particles are present, since the conductive particles are present between the electrode mixture and the metal foil, the electron conductivity of the electrode mixture and the metal foil is further improved. In this region, the coating layer is used as an adhesive in the same manner as described above. The bonding strength decreases due to the presence of the conductive particles. However, since the electron conductivity compensate the decrease in bonding strength, even in the region where the conductive particles are present in the area of the coating layer, it is possible to reduce the impedance and the internal resistance.

From the above, when the area ratio of the conductive particles present in the coating layer is less than 100%, it is possible to reduce the impedance and the internal resistance of the lithium secondary battery by increasing the bonding strength of the electrode mixture to the metal foil. In addition, when the area of the conductive particles in the coating layer is more than 50%, it is possible to reduce the impedance and the internal resistance of the lithium secondary battery by improving the electronic conductivity of the electrode mixture and the metal foil.

The area ratio of the conductive particles is calculated by the following manner.

Firstly, the pattern of the coating layer of metal foil observed at a high magnification from the normal direction, and then the images observed in the fields of three or more locations are photographed. The magnification is adjusted so that the number of conductive particles in one field of view is preferably 100 or more, more preferably 200 or more, and most preferably 300 or more. In addition, the intensity of light is adjusted in order to make the boundary of the particles to become clear, and to prevent the halation from occurring. In particular, care should be taken when a material which is easy to reflect light, such as aluminum foil, is used. The photos are binarized by the image analysis processes, and then the area $S_1$ of the portion having conductive particles, and the area So of the portion without conductive particles. The ratio A2 of the area of the conductive particles to the area of the coating layer is calculated by the following formula:

$$A2 = (S_1) / (S_1 + S_0) \times 100\%.$$

This A2 is the area ratio of the conductive particles. In the binarization process, gray levels of the photographic image are digitized to numeric values ranging from 0 to 255.

As described later, it is possible to control the area ratio by changing the amount of the dispersion medium when forming the coating layer, changing the process for the preparation of the coating liquid, and changing the method of applying the coating liquid.

< Electrode Mixture >

The electrode of the present invention may be used to any one of an anode and a cathode of lithium secondary batteries. When the electrode is a cathode, the cathode mixture is laminated on the metal foil. When the electrode is an anode, the anode mixture is laminated on the metal foil. The cathode mixture and the anode mixture will be explained below.

(Cathode Mixture)

A cathode mixture includes a cathode material consisting of a cathode active material or a cathode material consisting of a cathode active material which surface is wholly or partially attached by carbon material. Besides the cathode material, the cathode mixture may include a binder. Further, the cathode mixture may include a conductive additive.

(Cathode Material)

The cathode active material constituting the cathode material is preferably at least one of lithium-containing composite oxide, chalcogen compound, and lithium-containing olivine-type acid salt. Specifically, the cathode active material may include any one or more of lithium cobalt oxide, lithium manganese oxide, lithium nickel oxide, lithium cobalt manganese nickel oxide, titanium sulfide (TiS2), olivine-type lithium iron phosphate, olivine-type lithium manganese phosphate, preferably.

The preferred average particle size D50 of the cathode active material is 0.01 to 50$\mu$m. It is preferable that the average particle size is 50$\mu$m or less because absorption and desorption of lithium inside and outside of the particle is uniform. In addition, it is preferable that the average particle size is 0.01$\mu$m or more because the crystallinity increases, and the particle structure is prevented from being disturbed, and as a result, the performance degradation does not occur.

When the cathode active material is an olivine-type lithium iron phosphate or an olivine-type lithium manganese phosphate, since the specific resistance of the cathode active material itself is high, the average particle size D50 is preferably in the range from 0.01 to 0.5$\mu$m. When the cathode active material is the material other than olivine-type lithium iron phosphate or olivine-type lithium manganese phosphate, the average particle diameter D50 is preferably 0.5 to 50$\mu$m, and is more preferably 1 to 50$\mu$m.

It is preferable that carbon materials are attached to a partial surface or the entire surface of the particles of the cathode active material. As the carbon material attached to the particle surface, a carbon material which is a particulate or is film-like may be used.

The method of attaching the carbon material includes, for example, kneading the mixture of the carbon material and the cathode active material by compressing, shearing, and rolling the mixture, thereby attaching the carbon material to the partial surface or the entire surface of the particles of the cathode active material. As the carbon material, for example, graphite, carbon black, or the like may be used. Further, as the cathode active material, lithium cobalt oxide, lithium manganese oxide, lithium nickel oxide, lithium cobalt manganese nickel oxide may be used.

In addition, another method of attaching carbon material includes firing a mixture of a precursor of carbon material and a cathode active material under an inert condition or reduction condition, and preferably at a temperature of 500-800°C. As the carbon material, sugar such as sucrose or lactose, or water-soluble organic material such as ascorbic acid, 1,6-hexanediol, polyethylene glycol, polyethylene oxide, carboxymethyl cellulose, may be used. As the cathode active material, olivine-type lithium iron phosphate, olivine-type lithium manganese phosphate, may be preferably used.

Further, the amount of the carbon material attached to the cathode active material, as the content of the carbon material in the cathode material, is preferably in the range from 1 mass% to 40 mass%, more preferably from 3 mass% to 30 mass% , and most preferably 5 mass% to 20 mass%. When the amount of the carbon material is 1 mass% or more, since the amount of carbon material is not too small, the electron conductivity of the cathode material is enough. Further, the amount of the carbon material is 40 mass% or less, it is possible to maintain a high charge-discharge capacity of the cathode material while the amount of the cathode active material does not decrease.

As the binder of the cathode material, for example, polyethylene, polypropylene, ethylene-propylene copolymers, ethylene-propylene terpolymer, butadiene rubber, styrene butadiene rubber, butyl rubber, polytetrafluoroethylene, poly(meth)acrylate, polyvinylidene fluoride, polyethylene oxide, polypropylene oxide, polyepichlorohydrin, polyphosphazen, or polyacrylonitrile may be used. The addition amount of the binder is preferably from 0.1 to 10% by weight with respect to the dry weight of the cathode mixture.

Further, the conductive additive may be not necessary as long as electrical conductivity of the cathode mixture is sufficiently maintained by the carbon contained in the cathode material. The conductive additive may be added to improve the performance of the cathode. However, when added in excess, the mixing ratio of the cathode material in the cathode mixture is reduced relatively, and as a result, the charge-discharge capacity is reduced. Therefore, the presence or absence of the addition of the conductive additive may be determined according to the characteristics of the cathode.

As the conductive additive, conductive metal powder such as silver powder, conductive carbon powder such as furnace black, Ketjen black, or acetylene black may be used. When the conductive additive is added, the addition amount is 1.4 mass% or less, preferably less than 1.4 mass%, and more preferably 0.2 mass% or less, with respect to the dry weight of the cathode mixture. The conductive additive may not be added, when the electric conductivity of the cathode material is enough.

Furthermore, the cathode mixture, if necessary, may include ion-conducting compounds, thickeners, dispersing agents, lubricants or like. As the ion-conductive compounds, polysaccharide such as chitin or chitosan, or cross-linking compound of the polysaccharide may be used. As the thickener, carboxyl methyl cellulose or polyvinyl alcohol may be used.

The amount of cathode mixture to be formed on the metal foil is preferably 20 to 400g/m$^2$, is more preferably 30 to 300g/m$^2$, and is most preferably 50 to 200g/m$^2$. When in this range, the charge-discharge capacity of the cathode becomes enough, and peeling of the cathode mixture is suppressed.

(Anode Mixture)

Next, an anode mixture as an electrode mixture laminated on the surface of the metal foil includes anode active material, binder, and optionally a conductive additive. It is possible to use a sheet-like electrode including the anode material and an anode current collector in which the anode material is bonded.

As the anode active material, it is possible to use an anode active material known in the art. For example, carbon material such as artificial graphite or natural graphite, metal or semi-metal material such as Sn or Si. Further, as the anode active material, a metal oxide such as titanium oxide or lithium composite oxide may be used.

Further, on the surface of the anode active material, as in the case of the cathode, may be attached by the carbon material. In this case, in particular, a metallic or semi-metallic material such Sn or Si may be used.

As the binder, it is possible to use the same binder as those used in the cathode.

The conductive additive may be added if necessary, or may not be added. As a conductive additive, for example, conductive carbon powder such as furnace black, Ketjen black, acetylene black, carbon nanotubes, carbon nanofibers, vapor-grown carbon fibers, or vapor-grown carbon fibers is particularly preferred. The fiber diameter of vapor-grown carbon fibers is preferably 5nm to 0.2$\mu$m. The ratio of the diameter fiber to fiber length is preferably 5 to 1000.

When the conductive additive is added, with respect to the dry mass of the anode mixture, the addition amount of the conductive additive is 1.4 mass% or less, is preferably 0.4 mass% or less, is more preferably 0.2 mass% or less. When the electrical conductivity of the anode material is sufficient, it may not be added.

[Method of Producing Electrode of Lithium Secondary Batteries]

The method of producing an electrode of the present embodiment includes a step of forming a coating layer by applying a coating liquid for forming the coating layer on a metal foil wherein the coating liquid contains a binder, conductive particles, and a dispersion medium; and removing the dispersion medium, and another step of forming an electrode mixture on the coating layer. In addition, it is preferable that the method further includes a step of pressing the electrode mixture after molding the electrode mixture.

The step of forming the coating layer includes steps of applying coating liquid for forming the coating layer on one or both sides of the metal foil, wherein the coating liquid contains conductive particles, binder and a dispersion medium, but does not include an electrode active material; and then, carrying out heat treatment to remove the dispersion medium. The coating liquid for forming the coating layer may further contain at least one selected from the group consisting of organic acids or derivatives thereof.

The dispersion medium used in the coating liquid for forming the coating layer is not particularly limited as long as it is possible to disperse conductive particles, binder or organic acids or derivatives thereof which are added if necessary. As the dispersion medium, water or an organic solvent is preferably used. As the organic solvent, protic polar solvents and aprotic polar solvents may be used.

As the aprotic polar solvents, ethers, carbonates, amides, and esters may be used. Of these, amides or esters are preferred.

As the aprotic polar solvent, it is preferable that after coating, the solvent is evaporated at a temperature below the heat treatment temperature. Specifically, the solvent having a boiling point of 50 to 300°C under atmospheric pressure is preferable, and the solvent having a boiling point of 100 to 220°C is more preferable. When using the aprotic polar solvent having such a boiling point, the concentration of the coating liquid for forming the coating layer is not easily changed, and therefore, it is easy to obtain a coating layer having a predetermined coating amount or a predetermined thickness. Further, it is possible to sufficiently remove the dispersion medium by heat treatment. As the aprotic polar solvent having a boiling point as described above, N,N-dimethylacetamide, N-methyl-2-pyrrolidone, N-ethyl-pyrrolidone , γ-butyrolactone may be used. Of these, N-methyl-2-pyrrolidone is preferred.

Meanwhile, as the protic polar solvent, such as alcohols and polyhydric alcohols, and the like may be used. When the coating liquid for forming the coating layer contains a protic polar solvent, since the wettability of current collector may be improved, the area ratio of the conductive particles becomes uniform within above-described area. It is preferable that the boiling point of the protic polar solvent is at 100°C or less under atmospheric pressure. As preferable protic polar solvents, for example, ethanol, isopropyl alcohol, or n-propyl alcohol may be used.

The amount of the dispersion medium of the coating liquid for forming the coating layer is preferably 20 to 99 mass%, is more preferably 65 to 98 mass%, or is most preferably 80-95 mass%. The amount of protic polar solvent is not particularly limited, and is preferably 1 to 20 mass% with respect to the total weight of the dispersion medium. Since the composition of the dispersion medium is adjusted in the above-mentioned rang, viscosity of the coating liquid becomes appropriate, and is excellent in coating workability. As a result, it is easy to adjust the coating amount, the coating thickness of the coating layer and the area ratio of the conductive particles in the above-mentioned range, and with uniform distribution on the coating surface area. When the amount of the dispersion medium increases, the area ratio of the conductive particles and the thickness of the coating layer decrease. When the amount of the dispersion medium decreases, the area ratio of the conductive particles and the thickness of the coating layer increase.

The viscosity of the coating liquid for forming the coating layer is preferably 100 to 50000mPa·s, is more preferably 100 to 10000mPa·s, or is most preferably 100 to 5000mPa·s at room temperature. Measurement of viscosity is carried out by using a B-type viscometer by selecting a rotation speed and a rotor that is suitable for the viscosity range. For example, when the viscosity of the coating liquid having several hundred mPa·s is to be measured, Rotor No. 2 and 60 rpm should be selected.

The coating liquid for forming the coating layer used in the present invention, contains the conductive particles described above, a binder and organic acids or derivatives thereof, and may further contain additives such as dispersing agents, thickeners, anti-settling agents, anti-skinning agents, anti-foaming agents, electrostatic coating modifiers, anti-sagging agents, leveling agents, anti-cratering agents, and crosslinking catalysts. Any one of these known additives may be used. The addition amount is 10 parts or less by weight with respect to 100 parts by weight of the total amount of the conductive particles, the binder and the organic acid or derivatives thereof.

The coating liquid may be produced by mixing conductive particles, binder, and dispersant, and optionally additives or organic acid by using a mixer.

The order of mixing each component in the coating liquid is not particularly limited. However, from the viewpoint of easily obtained to facilitate uniform coating liquid, a mixture is firstly produced by mixing dispersion medium and binder, and then, conductive particles are added into the mixture and mixing them.

The method of coating the coating liquid for forming the coating layer on the metal foil is not particularly limited. For example, casting, bar coating, dip coating, and a printing method may be used.

As a method for adjusting the area ratio, designing a mask pattern of the coating roller of gravure coater, or using a stencil type or wire mesh type mask may be used.

Heat treatment is performed to remove the dispersion medium. Heat treatment method is not particularly limited; however, for example, the method using hot air is preferable. The heat treatment temperature is preferably from 100 to 300°C, and is more preferably from 120 to 250°C.The heating time is preferably from 10 seconds to 10 minutes. Moreover, during heat treatment, the coating layer may be pressed using a flat plate or roller.

The step of forming an electrode mixture includes applying coating liquid for forming the electrode mixture containing an electrode material and a dispersion medium on the coating layer, and removing a dispersion medium. A conductive additive is added to the coating liquid for forming the electrode mixture, and if necessary, a binder is further added to the coating liquid. As the dispersion medium, a known solvent may be used as long as the solvent does not change the properties of the coating layer formed previously.

After forming the electrode mixture, it is preferable that the electrode mixture material is pressed by using a flat plate or a roller. It is possible to improve the adhesion between the electrode mixture and the metal foil by pressing. The pressing pressure is about $1t/cm^2 \sim 3t/cm^2$, preferably.

[Lithium Secondary Battery]

According to a preferred embodiment of the present embodiment, a lithium secondary battery includes a cathode, an anode and a non-aqueous electrolyte. The lithium secondary battery of the present embodiment according to the present invention may include the electrode of the present invention as one of the cathode and anode, and a conventional electrode as another electrode. The lithium secondary battery of the present embodiment according to the present invention may include the two electrodes of the present invention as both the cathode and anode of lithium secondary batteries. As a result, a lithium secondary battery which has rapid charge and discharge rate and a high battery capacity retention ratio maintaining at conditions of large charge and discharge current, are obtained. The cathode and anode have been discussed. The non-aqueous electrolyte which is included in the lithium secondary battery will be explained below.

(Nonaqueous Electrolyte)

Next, as the nonaqueous electrolyte, for example, a nonaqueous electrolyte obtained by dissolving a lithium salt in an aprotic solvent is an exemplary example.

As the aprotic solvent, a mixed solvent of at least one or more kinds selected from a group consisting of ethylene carbonate, diethyl carbonate, dimethyl carbonate, methyl ethyl carbonate, propylene carbonate, butylene carbonate, and γ-butyrolactone, and vinylene carbonate is preferable.

In addition, examples of the lithium salt include $LiClO_4$, $LiPF_6$, $LiAsF_6$, $LiBF_4$, $LiSO_3CF_3$, $CH_3SO_3Li$, $CF_3SO_3Li$, and the like.

In addition, as the nonaqueous electrolyte, a so-called solid electrolyte or gel electrolyte may be used. Examples of the solid electrolyte or gel electrolyte include a polymer electrolyte such as sulfonated styrene-olefin copolymer, a polymer electrolyte using polyethylene oxide and $MgClO_4$, a polymer electrolyte having trimethylene oxide structure, and the like. As the nonaqueous solvent used in a polymer electrolyte, at least one kind selected from a group consisting of ethylene carbonate, diethyl carbonate, dimethyl carbonate, methyl ethyl carbonate, propylene carbonate, butylene carbonate, and γ-butyrolactone, and vinylene carbonate is preferable.

Alternatively it is also possible to use a conductive molten salt electrolyte. As a molten salt electrolyte, methyl-propyl-imidazolium bis (fluorosulfonyl) amide or lithium bis(trifluoromethane) sulfonic acid amide may be used.

Furthermore, the lithium secondary battery according to a preferable aspect of the embodiment may be provided with other members and the like as necessary without being limited to the cathode, the anode, and the nonaqueous electrolyte. For example, the lithium secondary battery may be provided with a separator that isolates the cathode and the anode from each other. The separator is a necessary component in a case where the nonaqueous electrolyte is not a polymer electrolyte. Examples of the separator include non-woven fabric, woven fabric, a micro-porous film, a combination thereof, and the like. More specifically, a porous polypropylene film, a porous polyethylene film, and the like may be appropriately used.

Also typically, the lithium secondary battery is sealed in an exterior material. As the exterior material, a metal can, metal, or a laminate film may be used. From the viewpoint of battery size, a laminate film is preferable.

The lithium secondary battery according to a preferred aspect of the embodiment may be used in various fields. For example, electric and electronic apparatuses such as a personal computer, a tablet computer, a note-type computer, a cellular phone, a wireless radio, an electronic organizer, an electronic dictionary, a PDA (Personal Digital Assistant), an electronic meter, an electronic key, an electronic tag, an energy storage device, a power tool, a toy, a digital camera, a digital video, AV equipment, and a vacuum cleaner; transportation systems such as an electric vehicle, a hybrid vehicle, an electric bike, a hybrid bike, an electric bicycle, an electric-assisted bicycle, a railway engine, an aircraft, and a vessel; power generation systems such as a solar power generation system, a wind power generation system, a tidal power generation system, a geothermal power generation system, a thermal difference power generation system, and a vibration power generation system; and the like.

As described above, according to the electrode for lithium secondary battery of the present exemplary embodiment, the lithium secondary battery including such the electrode enables a rapid charge and discharge and is able to maintain a high battery capacity retention ratio when charge and discharge current is large.

According to the method of producing an electrode for lithium secondary batteries of the present exemplary embodiment, the lithium secondary battery produced by the method enables rapid charge and discharge and is able to maintain a high battery capacity retention ratio when charge and discharge current is large.

According to the lithium secondary battery of the present exemplary embodiment, the lithium secondary battery produced by the method also enables rapid charge and discharge and is able to maintain a high battery capacity retention ratio when charge and discharge current is large.

Examples

(Example 1)

80 parts by weight of N-methyl-2-pyrrolidone, 5 parts by weight of isopropyl alcohol, 5 parts by weight of carbon black as conductive particles, 5 parts by weight of glyceryl chitosan as a polysaccharide, and 5 parts by weight of pyromellitic anhydride were fed to a dissolver-type stirrer and then mixed for 10 minutes at a speed of 300rpm. Then, after treatment for 30 seconds at 20000rpm by using a homogenizer (Manufactured by Ieda Trade Co., Ltd., product name PRO200), a coating liquid for forming a coating layer in which conductive particles or the like are uniformly dispersed in a dispersion medium was obtained.

Subsequently, as a current collector, an aluminum foil A1085 which had 30$\mu$m thickness and was washed with alkali was prepared. By using an applicator, the coating liquid for forming a coating layer was coated on both sides of the aluminum foil by using casting method. After treatments of drying by heating for 3 minutes at 180°C, a current collector provided with a coating layer was obtained.

Then, in the presence of sucrose, 90 parts by weight of a lithium iron phosphate which was cathode active material particles synthesized by hydrothermal method, was pyrolyzed to generate carbon. As a result, a cathode material that is combined with 5 parts by weight of carbon was obtained. A cathode slurry was obtained by mixing 95 parts by weight of the cathode material, 5 parts by weight of polyvinylidene fluoride (Manufactured by Kureha Co., Ltd., trade name KF Polymer # 1120), and 60 parts by weight of N-methyl-2-pyrrolidone (Industrial grade). The cathode slurry was applied to both sides of the current collector. Then it was cut after it was dried and pressed. As a result, a cathode was obtained by forming a cathode mixture layer with a 50$\mu$m thickness on one side of the current collector.

Then, a anode slurry was obtained by mixing 94 parts by weight of artificial graphite(Manufactured by Showa Denko KK, Products name SCMG-AR (SCMG is a registered trademark)), 1 part by weight of acetylene black(Manufactured by Denki Kagaku Kogyo Co., Ltd. Products name Denka Black (registered trademark) (Powdery product) ), 5 parts by weight of polyvinylidene fluoride (Commodity name # 9130 KF Polymer Co., Ltd. Kureha), and 94 parts by weight of N-methyl-2-pyrrolidone (Industrial grade). The anode slurry was applied on both sides of the electrolytic copper foil with 10$\mu$m thickness. Then it was dried and pressed. As a result, an anode was obtained by forming an anode active mixture layer with a thickness of 55$\mu$m per side of the current collector.

A separator (Manufactured by POLYPORE International, Inc. Products name Celgard2500) was incorporated between the cathode and the anode, and a number of the resulting layers were alternately laminated in order to get to a required design capacity of 1Ah. An aluminum tab lead plate and a nickel tab lead plate were mounted to the cathode and the anode, respectively, by using an ultrasonic welding machine. It was put into a bag-shaped aluminum laminate packaging material, and then treated by removing the moisture in a vacuum oven at 60°C. Then, LiPF6 solution with the concentration of 1M (Manufactured by Kishida Chemical Co., Ltd. Ethylene carbonate / ethyl methyl carbonate = 3/7 (volume ratio)) was injected as an organic electrolyte, and the impregnation was carried out for 24 hours under a vacuum atmosphere. A lithium secondary battery of the example was obtained by sealing the opening of the aluminum laminate packaging material with a vacuum sealer.

(Example 2)

In Example 2, a lithium secondary battery was produced by the same method as used in Example 1 except for that the lithium manganese phosphate synthesized by a hydrothermal method was used as the cathode active material particles.

(Example 3)

A cathode material that is combined with 5 parts by weight of carbon was obtained by treating 90 parts by weight of lithium cobalt oxide as a cathode active material particles, 3 parts by weight of graphite (Manufactured by Timcal Ltd. Products name KS6L) and 2 parts by weight of carbon (Manufactured by Timcal Ltd. Made, products name Super P-Li) as carbon materials by using a powder processing equipment (Manufactured by Hosokawa Micron Corporation, product name Nobiruta NOB-130). In Example 3, a lithium secondary battery was produced by the same method as used in Example 1 except that the cathode material was used.

(Example 4)

In Example 4, a lithium secondary battery was produced by the same method as used in Example 3 except that lithium manganese oxide was used as the cathode active material particles.

(Example 5)

In Example 5, a lithium secondary battery was produced by the same method as used in Example 3 except that lithium nickel oxide was used as the cathode active material particles.

(Example 6)

In Example 6, a lithium secondary battery was produced by the same method as used in Example 3 except that lithium cobalt manganese nickel oxide was used as the cathode active material particles.

(Comparative Example 1)

In Comparative Example 1, a lithium secondary battery was produced by the same method as used in Example 1 except that no coating layer was provided on the aluminum foil having 30μm thickness made from A1085 material which was washed with an alkali.

(Comparative Example 2)

A current collector was obtained in which no coating layer was provided on the aluminum foil having a thickness of 30μm made from an A1085 material which was washed with an alkali.
A cathode slurry was obtained by mixing 90 parts by weight of lithium iron phosphate which was synthesized by the hydrothermal method and used as a cathode active material particles, 5 parts by weight of carbon black, 5 parts by weight of polyvinylidene fluoride (Manufactured by Kureha Co., Ltd., trade name KF Polymer # 1120), and 100 parts by weight of N-methyl-2-pyrrolidone (Industrial grade). In Comparative Example 2, a lithium secondary battery was produced by the same method as used in Example 1 except that a cathode which was obtained by coating the resulting cathode slurry on the resulting current collector, was used.

(Comparative Example 3)

In Comparative Example 3, a lithium secondary battery was produced by the same method as used in Example 2 except for that no coating layer was provided on the aluminum foil having 30μm thickness made from A1085 material which was washed with an alkali.

(Comparative Example 4)

A current collector was obtained in which no coating layer was provided on the aluminum foil having 30μm thickness made from A1085 material which was washed with an alkali.
A cathode slurry was obtained by mixing 90 parts by weight of lithium manganese phosphate which was synthesized by the hydrothermal method and used as a cathode active material particles, 5 parts by weight of carbon black, 5 parts by weight of polyvinylidene fluoride (Manufactured by Kureha Co., Ltd., trade name KF Polymer # 1120), and 100 parts by weight of N-methyl-2-pyrrolidone (Industrial grade). In Comparative Example 4, a lithium secondary battery was produced by the same method as used in Example 2 except for the cathode which was obtained by coating the resulting cathode slurry on the resulting current collector was used.

(Comparative Example 5)

In Comparative Example 5, a lithium secondary battery was produced by the same method as used in Example 3 except for that no coating layer was provided on the aluminum foil having 30μm thickness made from A1085 material which was washed with an alkali.

(Comparative Example 6)

A current collector was obtained in which no coating layer was provided on the aluminum foil having 30μm thickness made from A1085 material which was washed with an alkali.
A cathode slurry was obtained by mixing 90 parts by weight of lithium cobalt oxide as a cathode active material particles, 5 parts by weight of carbon black, 5 parts by weight of polyvinylidene fluoride (Manufactured by Kureha Co., Ltd., trade name KF Polymer # 1120), 100 parts by weight of N-methyl-2-pyrrolidone (Industrial grade). In Comparative Example 6, a lithium secondary battery was produced by the same method as used in Example 3 except for the cathode which was obtained by coating the resulting cathode slurry on the resulting current collector was used.

(Comparative Example 7)

In Comparative Example 7, a lithium secondary battery was produced by the same method as used in Example 4 except for that no coating layer was provided on the aluminum foil having 30μm thickness made from A1085 material which was washed with an alkali.

(Comparative Example 8)

A current collector was obtained in which no coating layer was provided on the aluminum foil having 30μm thickness made from A1085 material which was washed with an alkali.
A cathode slurry was obtained by mixing 90 parts by weight of lithium manganese oxide as a cathode active material particles, 5 parts by weight of carbon black, 5 parts by weight of polyvinylidene fluoride (Manufactured by Kureha Co., Ltd., trade name KF Polymer # 1120), 100 parts by weight of N-methyl-2-pyrrolidone (Industrial grade). In Comparative Example 8, a lithium secondary battery was produced by the same method as used in Example 4 except for the cathode which was obtained by coating the resulting cathode slurry on the resulting current collector was used.

(Comparative Example 9)

In Comparative Example 9, a lithium secondary battery was produced by the same method as used in Example 5 except for that no coating layer was provided on the aluminum foil having 30μm thickness made from A1085 material which was washed with an alkali.

(Comparative Example 10)

A current collector was obtained in which no coating layer was provided on the aluminum foil having 30μm thickness made from A1085 material which was washed with an alkali.

A cathode slurry was obtained by mixing 90 parts by weight of lithium nickel oxide as a cathode active material particles, 5 parts by weight of carbon black, 5 parts by weight of polyvinylidene fluoride (Manufactured by Kureha Co., Ltd., trade name KF Polymer # 1120), 100 parts by weight of N-methyl-2-pyrrolidone (Industrial grade). In Comparative Example 10, a lithium secondary battery was produced by the same method as used in Example 5 except for the cathode which was obtained by coating the resulting cathode slurry on the resulting current collector was used.

(Comparative Example 11)

In Comparative Example 11, a lithium secondary battery was produced by the same method as used in Example 6 except for that no coating layer was provided on the aluminum foil having 30μm thickness made from A1085 material which was washed with an alkali.

(Comparative Example 12)

A current collector was obtained in which no coating layer was provided on the aluminum foil having 30μm thickness made from A1085 material which was washed with an alkali.

A cathode slurry was obtained by mixing 90 parts by weight of lithium cobalt manganese oxide as a cathode active material particles, 5 parts by weight of carbon black, 5 parts by weight of polyvinylidene fluoride (Manufactured by Kureha Co., Ltd., trade name KF Polymer # 1120), 100 parts by weight of N-methyl-2-pyrrolidone (Industrial grade). In Comparative Example 12, a lithium secondary battery was produced by the same method as used in Example 6 except for the cathode which was obtained by coating the resulting cathode slurry on the resulting current collector was used.

(Evaluation of Examples and Comparative Examples)

Charge and discharge characteristics of the battery obtained were evaluated by the following methods.

Constant current discharge capacities were measured from the fully charged state at each current rate of 0.2C, 0.5C, 1C, 2C, 5C, 10C, 20C by using a charge-discharge device (Manufactured by Toyo System Co., Ltd.).

Regarding the fully charged state, it refers to the state after one hour of finishing the charge in which battery was charged to a voltage of 4.0V by using a constant current of 0.2C.

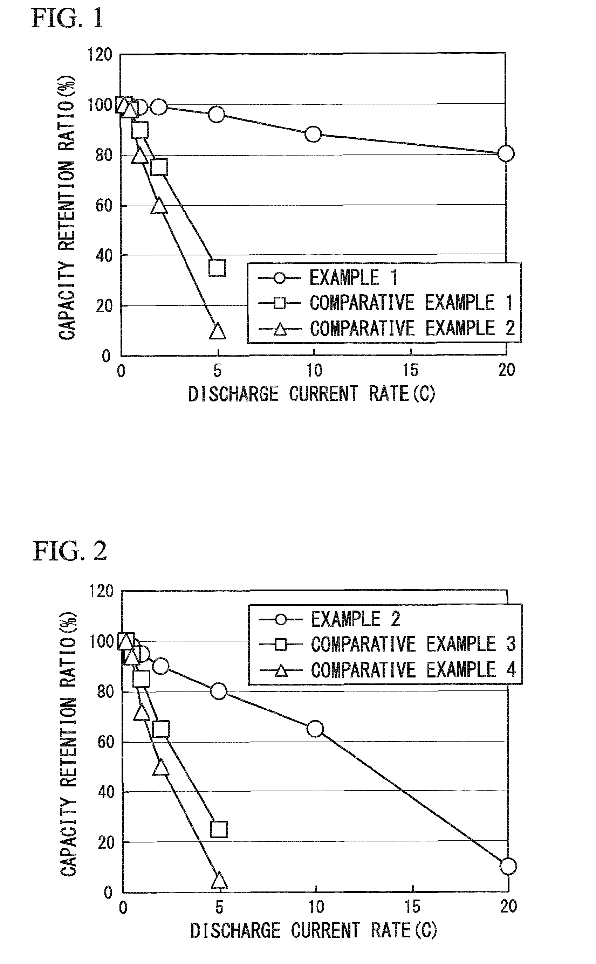

With respect to the capacity at 0.2C, the capacity retention ratio was calculated by using the capacity at each discharge current rate. The results are shown in Figure 1.

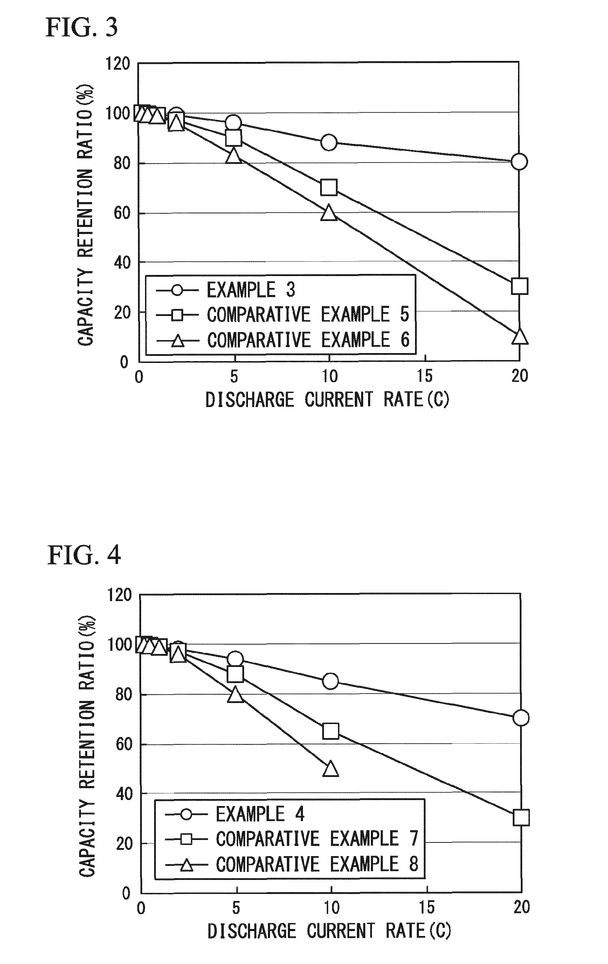

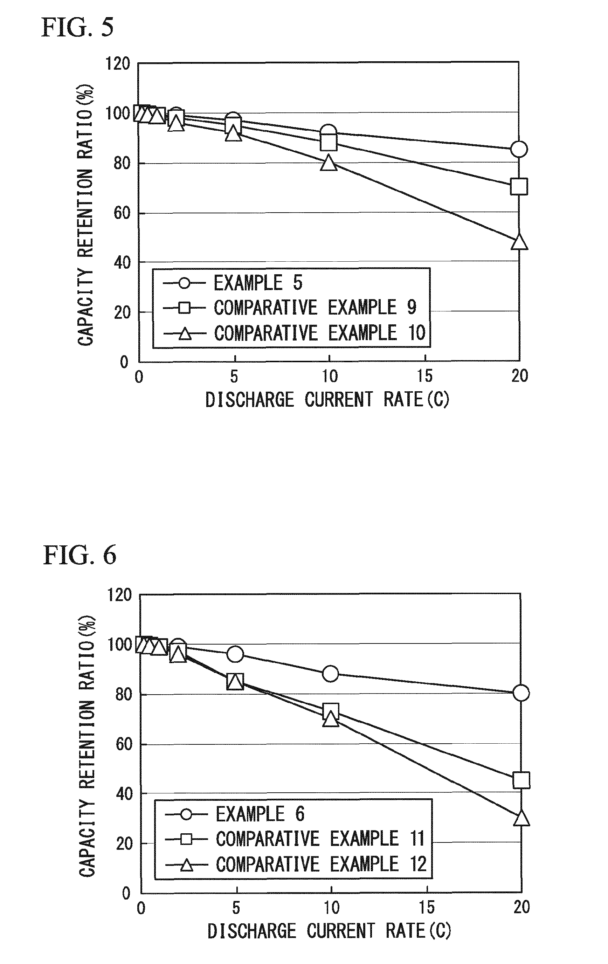

As show in Figures 1 to 6, when the batteries of Examples 1 to 6 were compared to the batteries of Comparative Examples 1 and 2, Comparative Examples 3 and 4, Comparative Examples 5 and 6, Comparative Examples 7 and 8, Comparative Examples 9 and 10, and Comparative Examples 11 and 12, respectively, the capacity retention ratios of the Examples are higher than those of the Comparative Examples at a current rate of 1C or more.

**Claims**

1. An electrode for lithium secondary batteries, comprising
   a metal foil and
   an electrode mixture laminated on the metal foil,
   wherein the electrode further comprises a coating layer comprising a binder and conductive particles between the metal foil and the electrode mixture, and the electrode mixture comprises an electrode active material and 0 mass% to 1.4 mass% of a conductive additive with respect to the electrode mixture.

2. The electrode for lithium secondary batteries according to claim 1,
   wherein the electrode mixture comprises an electrode material attaching a carbon material to a partial surface or the entire surface of the particles of the electrode active material, and
   the electrode mixture is substantially free of the conductive additive.

3. The electrode for lithium secondary batteries according to claim 1 or 2,
   wherein an area ratio of the conductive particles in the coating layer is 50% or more and less than 100%.

4. The electrode for lithium secondary batteries according to any one of claims 1 to 3,
   wherein the conductive particles are carbon particles.

5. The electrode for lithium secondary batteries according to any one of claims 1 to 4,
   wherein the binder is at least one selected from the group consisting of a polysaccharide and a derivative thereof.

6. The electrode for lithium secondary batteries according to any one of claims 1 to 5,
   wherein the coating layer comprises at least one selected from the group consisting of an organic acid or a derivative thereof.

7. The electrode for lithium secondary batteries according to any one of claims 1 to 6,
wherein the electrode active material comprises at least one selected from the group consisting of a lithium-containing composite oxide, a lithium-containing composite chalcogen and a lithium-containing olivine-type phosphate.

8. The electrode for lithium secondary batteries according to claim 7,
wherein the electrode active material comprises at least one selected from the group consisting of a lithium cobalt oxide, a lithium manganese oxide, a lithium nickel oxide, a lithium cobalt manganese nickel oxide, a titanium sulfide (TiS2), an olivine-type lithium iron phosphate or olivine-type lithium manganese phosphate.

9. The electrode for lithium secondary batteries according to any one of claims 1 to 8,
wherein the binder comprises at least one selected from the group consisting of chitosan, chitin, cellulose and their derivatives.

10. The electrode for lithium secondary batteries according to any one of claims 6 to 9,
wherein the organic acid or derivative thereof is at least one selected from the group consisting of trimellitic anhydride, pyromellitic anhydride and 1,2,3,4-butane tetracarboxylic acid, and derivatives thereof.

11. The electrode for lithium secondary batteries according to any one of claims 1 to 10,
wherein the content of the conductive particles contained in the coating layer is in the range of 30 to 90 mass%.

12. A lithium secondary battery comprising the electrode for lithium secondary batteries according to any one of claims 1 to 11 and an electrolyte.

13. A method of producing an electrode for lithium secondary batteries, the method comprises steps of
forming a coating layer by
applying a coating liquid for forming the coating layer on a metal foil wherein the coating liquid comprises a dispersion medium, conductive particles and a binder; and
removing the dispersion medium, and
forming an electrode mixture by
applying a coating liquid for forming the electrode mixture on the coating layer after forming the coating layer, wherein the coating liquid comprises an electrode active material, a conductive additive and a dispersion medium; and
removing the dispersion medium,
wherein a composition ratio of the conductive additive is from 0 to 1.4 mass% with respect to the resulting electrode mixture.

14. The electrode for lithium secondary batteries according to any one of claims 1 to 11,
wherein the electrode for lithium secondary batteries is a cathode for lithium secondary batteries which comprises
a metal foil, and a cathode mixture laminated on the metal foil,
and further comprises a coating layer comprising a binder and conductive particles between the cathode mixture and the metal foil, and
the cathode mixture comprises
a cathode material consisting of only a cathode active material or a cathode material in which carbon material is attached to a partial surface or the entire surface of the particles of the cathode active material, and
a conductive additive wherein a composition ratio of the conductive additive is 0 mass% to 1.4 mass% with respect to the cathode mixture.

15. The electrode for lithium secondary batteries according to claim 14,
wherein the cathode mixture comprises a cathode material in which carbon material is attached to a partial surface or the entire surface of the cathode active material particle of the cathode mixture, and the cathode mixture is substantially free of the conductive additive.

16. The electrode for lithium secondary batteries according to claim 15,
wherein the cathode material in which carbon material is attached to a partial surface or the entire surface of the cathode active material particle is obtained by one of:

a method comprising firing a mixture of the cathode active material and a carbon formation material as a precursor of the carbon material, under reduction conditions or under inert conditions, at a temperature of 500 to 800°C, and
a method comprising kneading a mixture of the cathode active material and the carbon material by compressing, shearing, and rolling the mixture.

17. The electrode for lithium secondary batteries according to claim 16,
wherein the metal foil is a foil of aluminum or aluminum alloy,
the conductive particle in the coating layer is a carbon particle, and the area ratio of the conductive particle is more than 50% and less than 100%,
the binder in the coating layer is one of polysaccharides or derivatives thereof, and an aromatic carboxylic acid or a derivative thereof, and

the cathode active material is at least one selected from the group consisting of an olivine-type lithium iron phosphate, olivine-type lithium manganese phosphate, lithium cobalt oxide , lithium manganese oxide, lithium nickel oxide, and lithium cobalt manganese nickel oxide lithium.

18. The method of producing an electrode for lithium secondary batteries according to claim 13,
wherein the electrode for lithium secondary batteries is a cathode for lithium secondary batteries, and
the method comprises steps of
forming a coating layer by
applying a coating liquid for forming the coating layer on a metal foil wherein the coating liquid comprises a dispersion medium, conductive particles and a binder; and
removing the dispersion medium, and
forming an cathode mixture by
applying a coating liquid for forming the cathode mixture on the coating layer after forming the coating layer, wherein the coating liquid comprises a cathode material consisting of only cathode active material or a cathode material in which carbon material is attached to a partial surface or the entire surface of the cathode active material particle,
a conductive additive and
a dispersion medium; and
removing the dispersion medium,
wherein a composition ratio of the conductive additive is from 0 to 1.4 mass% with respect to the resulting cathode mixture.

19. The method of producing an electrode for lithium secondary batteries according to claim 18,
wherein the cathode material is the cathode material in which carbon material is attached to a partial surface or the entire surface of the cathode active material particle, and
the method of attaching the carbon material comprises one of:

a method comprising firing a mixture of the cathode active material and a carbon formation material as a precursor of the carbon material, under reduction conditions or under inert conditions, at a temperature of 500 to 800°C, and
a method comprising kneading a mixture of the cathode active material and the carbon material by compressing, shearing, and rolling the mixture.

FIG. 1

FIG. 2

FIG. 3

FIG. 4

## FIG. 5

## FIG. 6

## INTERNATIONAL SEARCH REPORT

| International application No. |
|---|
| PCT/JP2012/066988 |

A. CLASSIFICATION OF SUBJECT MATTER
*H01M4/13*(2010.01)i, *H01M4/139*(2010.01)i, *H01M4/36*(2006.01)i, *H01M4/58* (2010.01)i, *H01M4/62*(2006.01)i, *H01M4/66*(2006.01)i

According to International Patent Classification (IPC) or to both national classification and IPC

B. FIELDS SEARCHED

Minimum documentation searched (classification system followed by classification symbols)
H01M4/13, H01M4/139, H01M4/36, H01M4/58, H01M4/62, H01M4/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-351612 A (Matsushita Battery Industrial Co., Ltd.), 21 December 2001 (21.12.2001), paragraphs [0010] to [0027] (Family: none) | 1-19 |
| Y | JP 11-283623 A (Sanyo Electric Co., Ltd.), 15 October 1999 (15.10.1999), paragraphs [0005] to [0018] (Family: none) | 1-19 |
| Y | JP 2007-335245 A (Sanyo Electric Co., Ltd.), 27 December 2007 (27.12.2007), paragraph [0047] (Family: none) | 1-19 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>30 August, 2012 (30.08.12) | Date of mailing of the international search report<br>11 September, 2012 (11.09.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/066988 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-100296 A  (Samsung SDI Co., Ltd.),<br>04 April 2003 (04.04.2003),<br>paragraph [0063]<br>& US 2003/0054250 A1    & US 2006/0269659 A1<br>& KR 10-2003-0008704 A   & CN 1399363 A | 1-19 |
| Y | WO 2011/074270 A1  (Showa Denko Kabushiki Kaisha),<br>23 June 2011 (23.06.2011),<br>paragraphs [0020] to [0023]<br>(Family: none) | 6-12,14-17 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011150135 A
- JP 2001266850 A
- JP H07123053 B
- JP H0424831 B
- JP H07130356 B

- JP 2005222772 A
- JP 2007005281 A
- JP 2011071019 A
- JP 2006261062 A
- JP 2001351612 A

**Non-patent literature cited in the description**

- *45th Battery Symposium in Japan,* 2004, 3C18